# EUROPEAN PATENT SPECIFICATION

(11) **EP 4 358 268 B1**
(45) Date of publication and mention of the grant of the patent: **15.01.2025**
(21) Application number: 23201281.5
(22) Date of filing: 02.10.2023
(51) Int. Cl.: H01M 50/367, H01M 10/613, H01M 50/209

(54) **BATTERY MODULE**
BATTERIEMODUL
MODULE DE BATTERIE

(30) Priority: 20.10.2022 JP 2022168079
(43) Date of publication of application: 24.04.2024
(73) Proprietor: Prime Planet Energy & Solutions, Inc., Chuo-ku Tokyo 103-0022 (JP)
(72) Inventor: YOSHIMURA, Yutaro, Tokyo, 103-0022 (JP); TERANAKA, Tomochika, Tokyo, 103-0022 (JP); ABE, Kosyo, Tokyo, 103-0022 (JP); TAKEDA, Takahide, Tokyo, 103-0022 (JP)
(74) Representative: Kuhnen & Wacker Patent- und Rechtsanwaltsbüro PartG mbB

(56) References cited:
- WO-A1-2013/146562
- JP-A- 2015 159 024
- US-B2- 8 895 177

## Description

### CROSS REFERENCE TO RELATED APPLICATIONS

This nonprovisional application is based on Japanese Patent Application No. 2022-168079 filed on October 20, 2022 with the Japan Patent Office.

### BACKGROUND OF THE INVENTION

### Field of the Invention

The present invention relates to a battery module.

### Description of the Background Art

For example, Japanese Patent Laying-Open No. 2015-159024 discloses a battery module including: a plurality of battery cells; a holding member having a plurality of bus bars for connecting the plurality of battery cells in series, the plurality of bus bars being insert-molded; and a gas-discharge duct extending in an elongated form in a direction in which the battery cells are arranged side by side. The holding member is provided with a pair of supporting rails. The gas-discharge duct is provided with suspension rails slidably engaged with the pair of supporting rails in the direction in which the battery cells are arranged side by side.

WO 2013/146562 discloses a power supply device including: a battery stack formed by stacking a plurality of secondary battery cells with a separator being interposed therebetween; and a gas duct that guides, along a predetermined path, gas discharged from a safety valve of each secondary battery cell. A claw portion is provided at an upper end of the separator. A duct anchoring piece engaged with the claw portion is provided on a side surface of the gas duct.

### SUMMARY OF THE INVENTION

As disclosed in Japanese Patent Laying-Open No. 2015-159024, there has been known a battery module including: a plurality of stacked battery cells; and a duct through which gas discharged from each battery cell flows, the duct extending in a stacking direction of the battery cells. During a process of assembling such a battery module, an operation of attaching the duct to the plurality of battery cells is performed.

However, in the battery module disclosed in Japanese Patent Laying-Open No. 2015-159024, the holding member provided with the pair of supporting rails and the gas-discharge duct provided with the suspension rails need to be slid relative to each other by a length corresponding to the total length of the plurality of battery cells in the stacking direction thereof. Therefore, a relative sliding amount of the holding member and the gas-discharge duct becomes large, thereby compromising workability when attaching the gas-discharge duct.

Thus, it is an object of the present invention to solve the above-mentioned problem and to provide a battery module excellent in workability when attaching a duct.
[1] A battery module comprising: a plurality of battery cells stacked in a first direction; a duct through which gas discharged from each of the battery cells flows, the duct extending in the first direction with the duct facing the plurality of battery cells in a second direction orthogonal to the first direction; and an attachment-target member to which the duct is attached, the attachment-target member being held by the battery cells, wherein the attachment-target member has a pair of first wall portions facing each other with a space being interposed between the pair of first wall portions in a third direction orthogonal to the first direction and the second direction, the duct has a pair of second wall portions respectively facing the pair of first wall portions in the third direction, and is disposed between the pair of first wall portions, one wall portion that is one of each first wall portion and each second wall portion is provided with a claw portion having a protruding shape protruding in the third direction, the other wall portion that is the other of each first wall portion and each second wall portion is provided with a groove portion having a recessed shape recessed in the third direction, and the groove portion includes a first segment portion and a second segment portion, the first segment portion extending in the first direction, the claw portion being disposed in the first segment portion, the first segment portion anchoring the claw portion in the second direction, the second segment portion being opened at an end portion of the other wall portion in the second direction, the second segment portion extending in a direction intersecting the first direction, the second segment portion being connected to the first segment portion, the second segment portion allowing the claw portion to enter the first segment portion when attaching the duct to the attachment-target member.
   According to the battery module thus configured, when attaching the duct to the attachment-target member, the duct and the attachment-target member are slid relative to each other to allow the claw portion to enter the first segment portion of the groove portion through the second segment portion of the groove portion. In this case, since the first segment portion extends in the first direction that is the stacking direction of the battery cells and the second segment portion extends in the direction intersecting the first direction, a relative sliding amount of the duct and the attachment-target member in the first direction can be suppressed to be small. Thus, workability when attaching the duct can be excellent.
[2] The battery module according to [1], wherein a set of the claw portion and the groove portion is provided at each of a plurality of positions with a space being interposed between the plurality of positions in the first direction.
   According to the battery module thus configured, the duct can be more firmly attached to the attachment-target member.
[3] The battery module according to [1] or [2], wherein the second segment portion extends in the second direction.
   According to the battery module thus configured, the relative sliding amount of the duct and the attachment-target member in the first direction can be further suppressed to be small when attaching the duct to the attachment-target member.
[4] The battery module according to any one of [1] to [3], wherein the other wall portion further has a stepped portion provided on a path of the first segment portion, the stepped portion rising from a bottom surface of the groove portion, and the claw portion is disposed on the path of the first segment portion and opposite to the second segment portion with the stepped portion being interposed between the claw portion and the second segment portion.
   According to the battery module thus configured, since the claw portion disposed on the path of the first segment portion is held, by the stepped portion, opposite to the second segment portion with the stepped portion being interposed therebetween, a state of attachment of the duct to the attachment-target member can be more securely maintained.
[5] The battery module according to any one of [1] to [4], further comprising an end plate disposed at an end portion beside the plurality of battery cells in the first direction, wherein the duct includes a duct main body portion having the pair of first wall portions and extending in the first direction to form a space through which the gas flows, a duct extension portion extending, in one direction along the first direction, from an end portion of the duct main body portion in the first direction, and a clip portion extending from the duct extension portion in the other direction along the first direction, the clip portion and the duct extension portion sandwiching the end plate in the second direction.
   According to the battery module thus configured, by the engagement between the end plate and each of the duct extension portion and the clip portion, the state of attachment of the duct to the attachment-target member can be more securely maintained.
[6] The battery module according to [5], wherein the first segment portion extends, in the one direction along the first direction, from a position at which the first segment portion and the second segment portion are connected to each other.
   According to the battery module thus configured, by sliding the duct and the attachment-target member relative to each other in the first direction, the placement of the claw portion from the second segment portion to the first segment portion and the insertion of the clip portion with respect to the end plate can be performed simultaneously.
[7] The battery module according to any one of [1] to [6], comprising a plurality of battery cell units arranged side by side in the first direction, wherein each of the battery cell units has a plurality of the battery cells arranged side by side continuously in the first direction, and a case body that accommodates the plurality of the battery cells arranged side by side continuously in the first direction, and the attachment-target member is constituted of a plurality of the case bodies.
   According to the battery module thus configured, the workability when attaching the duct to the plurality of case bodies can be excellent.
[8] The battery module according to [7], wherein the one wall portion is each first wall portion and the other wall portion is each second wall portion, the first wall portion is provided with first protrusions and second protrusions, each first protrusion and each second protrusion being respectively disposed at both end portions of each case body in the first direction, each of the first protrusions and the second protrusions protruding in the third direction, the claw portion is formed by a first protrusion and a second protrusion of the respective case bodies adjacent to each other in the first direction, the first protrusion and the second protrusion of the respective case bodies adjacent to each other being connected to each other, and a first protrusion and a second protrusion respectively disposed at one end and the other end of the plurality of battery cell units arranged side by side in the first direction are anchored in the second direction by the second wall portion.

According to the battery module thus configured, by utilizing the first protrusion and the second protrusion respectively disposed at the one end and the other end of the plurality of battery cell units, the duct can be more firmly attached to the plurality of case bodies.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing a battery module according to an embodiment of the present invention.
Fig. 2 is an exploded assembly diagram showing the battery module in Fig. 1.
Fig. 3 is a perspective view showing an internal structure of the battery module in Fig. 1.
Fig. 4 is another perspective view showing the internal structure of the battery module in Fig. 1.
Fig. 5 is a perspective view showing a battery cell unit included in the battery module in Fig. 1.
Fig. 6 is a perspective view showing the battery cell included in the battery cell unit in Fig. 1.
Fig. 7 is a perspective view showing a duct.
Fig. 8 is another perspective view showing the duct.
Fig. 9 is a cross sectional view showing the battery module (state in which the duct is attached to the attachment-target member) when viewed in a direction of arrow on a line IX-IX in Fig. 2.
Fig. 10 is a cross sectional view showing the battery module (state in which the duct is attached to the attachment-target member) when viewed in a direction of arrow on a line X-X in Fig. 2.
Fig. 11 is a cross sectional view showing the battery module (state in which the duct is attached to the attachment-target member) when viewed in a direction of an arrow on a line XI-XI in Fig. 2.
Fig. 12 is a side view showing a first step when attaching the duct to the attachment-target member.
Fig. 13 is a side view showing a second step when attaching the duct to the attachment-target member.
Fig. 14 is a perspective view showing the battery module when viewed in a direction indicated by an arrow XIV in Fig. 3.

### DESCRIPTION OF THE PREFERRED EMBODIMENTS

Embodiments of the present invention will be described with reference to figures. It should be noted that in the figures referred to below, the same or corresponding members are denoted by the same reference characters.

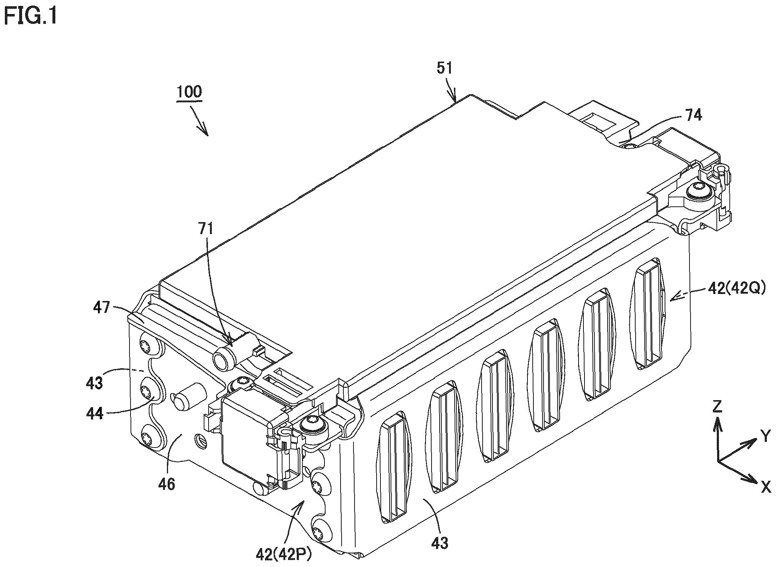

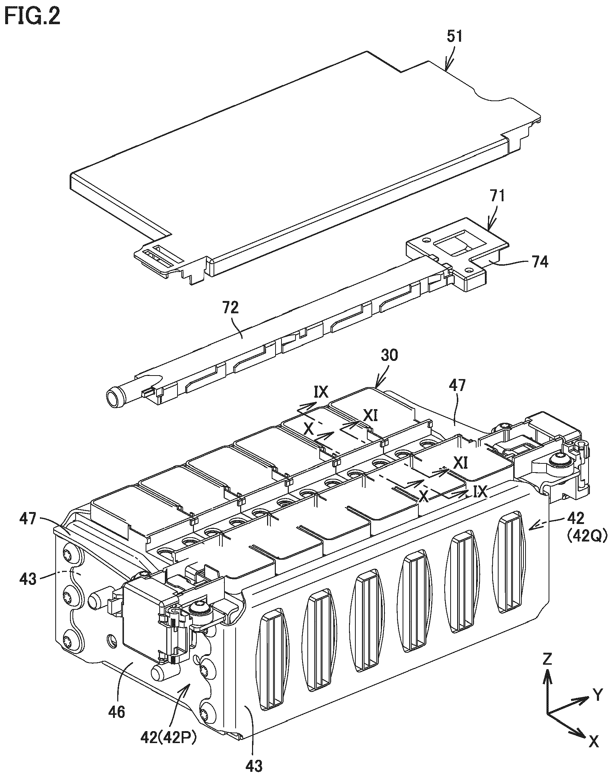

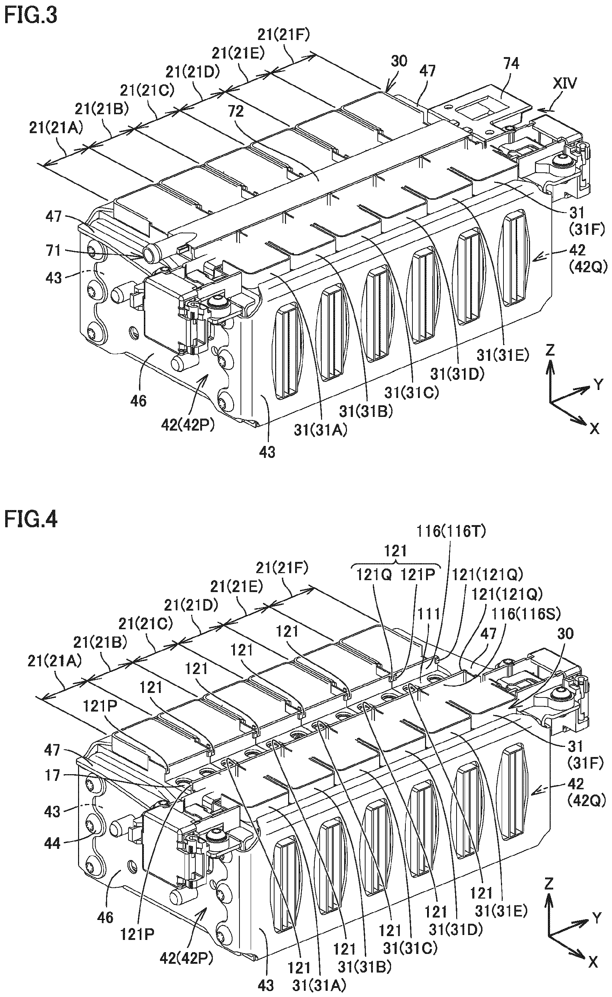

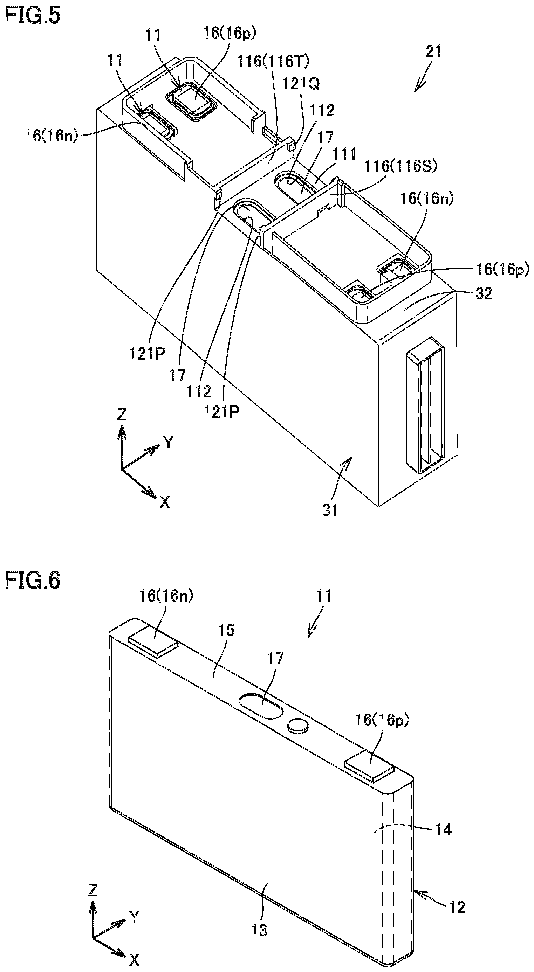

Fig. 1 is a perspective view showing a battery module according to an embodiment of the present invention. Fig. 2 is an exploded assembly diagram showing the battery module in Fig. 1. Each of Figs. 3 and 4 is a perspective view showing an internal structure of the battery module in Fig. 1. Fig. 5 is a perspective view showing a battery cell unit included in the battery module in Fig. 1. Fig. 6 is a perspective view showing the battery cell included in the battery cell unit in Fig. 1.

Referring to Figs. 1 to 6, a battery module 100 is used as a power supply for driving a vehicle such as a hybrid electric vehicle (HEV), a plug-in hybrid electric vehicle (PHEV), or a battery electric vehicle (BEV).

In the present specification, for convenience of description of the structure of battery module 100, the "Y axis" represents an axis extending in parallel with a stacking direction of a plurality of below-described battery cells 11, the "X axis" represents an axis extending in a direction orthogonal to the Y axis, and the "Z axis" represents an axis extending in a direction orthogonal to the Y axis and the X axis. An obliquely rightward upward direction in the plane of sheet of Fig. 1 is "+Y axis direction", and an obliquely leftward downward direction in the plane of sheet of Fig. 1 is "-Y axis direction". An obliquely rightward downward direction in the plane of sheet of Fig. 1 is "+X axis direction" and an obliquely leftward upward direction in the plane of sheet of Fig. 1 is "-X axis direction". An upward direction in the plane of sheet of Fig. 1 is "+Z axis direction" and a downward direction in the plane of sheet of Fig. 1 is "-Z axis direction". Typically, battery module 100 is mounted on a vehicle in such a posture that the +Z axis direction corresponds to the upward direction and the -Z axis direction corresponds to the downward direction.

First, an overall structure of battery module 100 will be described. As shown in Figs. 3 and 4, battery module 100 has a plurality of battery cell units 21 (21A, 21B, 21C, 21D, 21E, 21F).

The plurality of battery cell units 21 are arranged side by side in the Y axis direction. Battery cell unit 21A, battery cell unit 21B, battery cell unit 21C, battery cell unit 21D, battery cell unit 21E, and battery cell unit 21F are arranged side by side in this order from the negative side to the positive side in the Y axis direction. It should be noted that the number of battery cell units 21 included in battery module 100 is not particularly limited as long as two or more battery cell units 21 are included.

As shown in Figs. 5 and 6, each of battery cell units 21, i.e., each of battery cell units 21A to 21F includes a plurality of battery cells 11 and a case body 31.

In each battery cell unit 21, two battery cells 11 are arranged side by side continuously in the Y axis direction. It should be noted that the number of battery cells 11 included in each battery cell unit 21 is not particularly limited as long as a plurality of battery cells 11 are included.

Each of battery cells 11 is a lithium ion battery. Battery cell 11 has an output density of 8000 W/L or more. Battery cell 11 has a prismatic shape and has a thin plate shape in the form of a rectangular parallelepiped. The plurality of battery cells 11 are stacked such that the Y axis direction corresponds to the thickness direction of each battery cell 11.

Each of battery cells 11 has an exterior package 12. Exterior package 12 is constituted of a housing having a rectangular parallelepiped shape, and forms the external appearance of battery cell 11. An electrode assembly and an electrolyte solution are accommodated in exterior package 12.

Exterior package 12 has a cell side surface 13, a cell side surface 14, and a cell top surface 15. Each of cell side surface 13 and cell side surface 14 is constituted of a flat surface orthogonal to the Y axis direction. Cell side surface 13 and cell side surface 14 are oriented oppositely in the Y axis direction. Each of cell side surface 13 and cell side surface 14 has the largest area among the areas of the plurality of side surfaces of exterior package 12. Cell top surface 15 is constituted of a flat surface orthogonal to the Z axis direction. Cell top surface 15 is oriented in the +Z axis direction.

Battery cell 11 further has a gas-discharge valve 17. Gas-discharge valve 17 is provided in cell top surface 15. Gas-discharge valve 17 is provided at the center portion of cell top surface 15 in the X axis direction. When internal pressure of exterior package 12 becomes more than or equal to a predetermined value due to gas generated inside exterior package 12, gas-discharge valve 17 discharges the gas to the outside of exterior package 12. The gas from gas-discharge valve 17 flows through a below-described duct 71 and is discharged to the outside of battery module 100.

Battery cell 11 further has electrode terminals 16 that are a pair of a positive electrode terminal 16p and a negative electrode terminal 16n. Electrode terminals 16 are provided on cell top surface 15. Positive electrode terminal 16p and negative electrode terminal 16n are provided on both sides with gas-discharge valve 17 being interposed therebetween in the X axis direction.

Case body 31 has a rectangular parallelepiped appearance. Case body 31 is composed of a resin. In each battery cell unit 21, case body 31 accommodates a plurality of battery cells 11. Case body 31 has a case top portion 32. Case top portion 32 has a wall shape having a thickness direction corresponding to the Z axis direction with case top portion 32 being disposed in parallel with the X-Y axes plane.

As shown in Figs. 3 and 4, the plurality of battery cells 11 are stacked in the Y axis direction across battery cell units 21A to 21F arranged side by side in the Y axis direction. The plurality of battery cells 11 are stacked such that cell side surfaces 13 of battery cells 11 adjacent to each other in the Y axis direction face each other and cell side surfaces 14 of battery cells 11 adjacent to each other in the Y axis direction face each other. Thus, positive electrode terminals 16p and negative electrode terminals 16n are alternately arranged in the Y axis direction in which the plurality of battery cells 11 are stacked. Positive electrode terminal 16p and negative electrode terminal 16n adjacent to each other in the Y axis direction are connected to each other by a bus bar (not shown) disposed in case top portion 32. Thus, the plurality of battery cells 11 are electrically connected together in series.

As shown in Figs. 1 to 4, battery module 100 further has a pair of end plates 42 (42P, 42Q) and a pair of binding bars 43. The pair of binding bars 43 and the pair of end plates 42 collectively hold the plurality of battery cell units 21 (the plurality of battery cells 11) arranged side by side in the Y axis direction.

The pair of end plates 42 are disposed at both ends beside the plurality of battery cells 11 (the plurality of battery cell units 21) in the Y axis direction. End plate 42P faces battery cell unit 21A in the Y axis direction, and end plate 42Q faces battery cell unit 21F in the Y axis direction.

Each of end plates 42 has a plate portion 46 and a roof portion 47. Plate portion 46 has a plate shape having a thickness direction corresponding to the Y axis direction. Roof portion 47 extends, from an end portion (upper end portion) of plate portion 46 in the +Z axis direction, in a direction away from the stack of battery cells 11 in the Y axis direction. Roof portion 47 has a roof shape having a thickness in the Z axis direction and extending in the form of a strip along the upper end portion of plate portion 46.

The pair of binding bars 43 are disposed at both ends of the stack of battery cells 11 in the X axis direction. Each of binding bars 43 extends in the Y axis direction. An end portion of binding bar 43 in the -Y axis direction is connected to end plate 42P. An end portion of binding bar 43 in the +Y axis direction is connected to end plate 42Q. The pair of binding bars 43 and the pair of end plates 42 apply a restraint force in the Y axis direction onto the plurality of battery cells 11 (the plurality of battery cell units 21).

Battery module 100 further has duct 71 and a cover body 51. Duct 71 is composed of a resin. Duct 71 extends in the Y axis direction with duct 71 facing the plurality of battery cells 11 (the plurality of battery cell units 21) in the Z axis direction. Duct 71 is an elongated body extending in the Y axis direction. Duct 71 forms a path through which gas discharged from each of the plurality of battery cells 11 flows. Duct 71 is attached to an attachment-target member 30. Attachment-target member 30 is a member held by battery cells 11, and, in the present embodiment, is constituted of the plurality of case bodies 31 arranged side by side in the Y axis direction.

Cover body 51 is composed of a resin. Cover body 51 is provided to cover the plurality of battery cells 11 in the Z axis direction. Cover body 51 is provided to face case top portions 32 of case bodies 31 in the Z axis direction. Cover body 51 is provided to further cover duct 71.

Next, a structure for attaching duct 71 to attachment-target member 30 (the plurality of case bodies 31) will be described in detail.

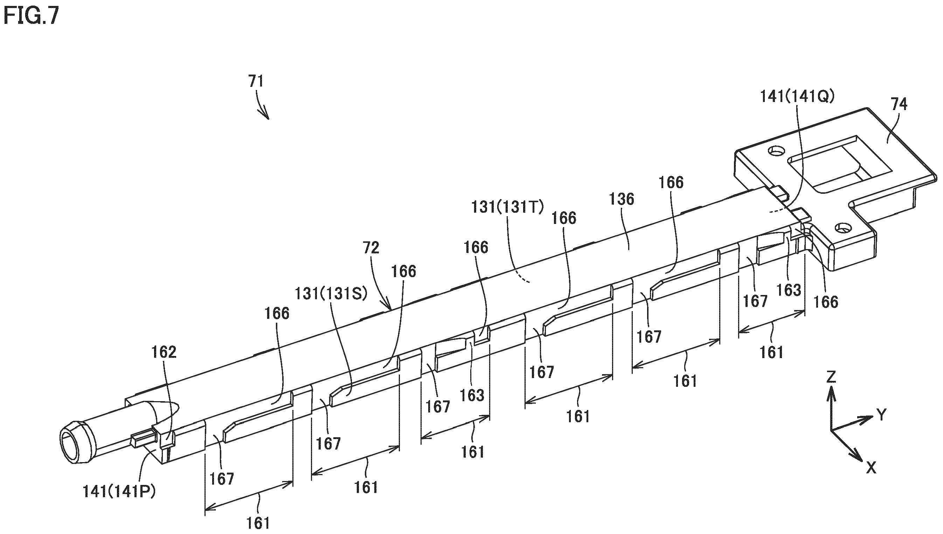

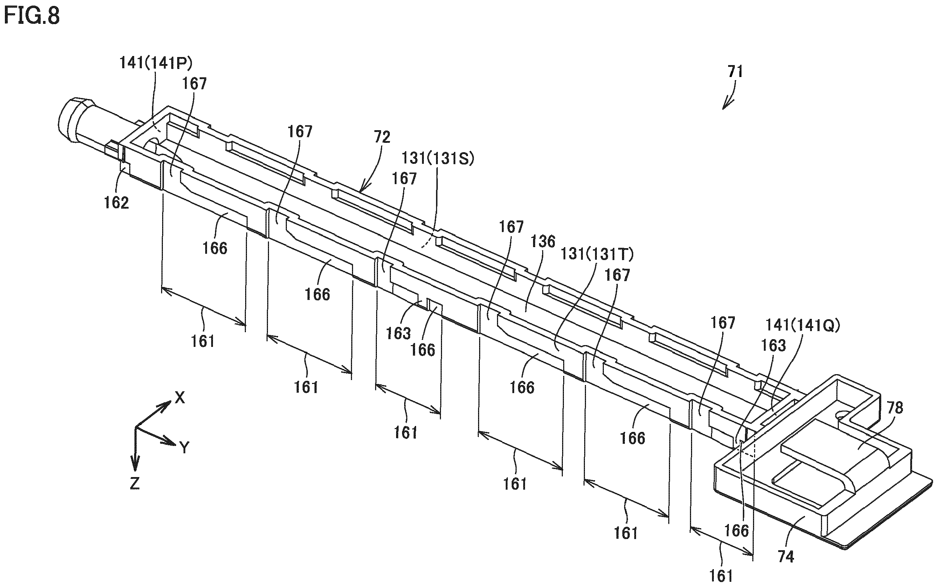

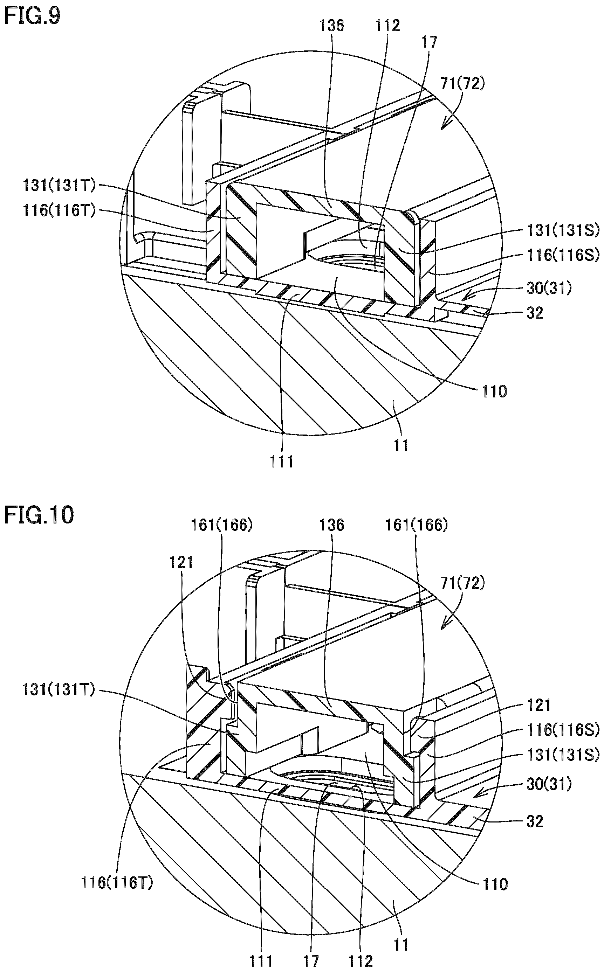

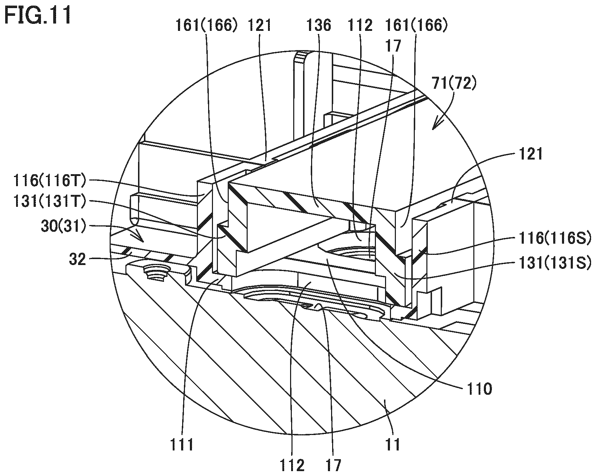

Each of Figs. 7 and 8 is a perspective view showing the duct. Fig. 9 is a cross sectional view showing the battery module (state in which the duct is attached to the attachment-target member) when viewed in a direction of arrow on a line IX-IX in Fig. 2. Fig. 10 is a cross sectional view showing the battery module (state in which the duct is attached to the attachment-target member) when viewed in a direction of arrow on a line X-X in Fig. 2. Fig. 11 is a cross sectional view showing the battery module (state in which the duct is attached to the attachment-target member) when viewed in a direction of arrow on a line XI-XI in Fig. 2.

Referring to Figs. 4 and 5 as well as Figs. 9 to 11, attachment-target member 30 (the plurality of case bodies 31) has a floor wall portion 111 and a pair of vertical wall portions 116 (116S, 116T).

Floor wall portion 111 is constituted of a portion of case top portion 32 of each case body 31. Floor wall portion 111 is disposed in parallel with the X-Y axes plane. Floor wall portion 111 has a wall shape having a thickness in the Z axis direction and extending in the Y axis direction across the plurality of case bodies 31 arranged side by side in the Y axis direction. Floor wall portion 111 is disposed just above each of cell top surfaces 15 of battery cells 11 accommodated in case bodies 31. Floor wall portion 111 is disposed between positive electrode terminals 16p and negative electrode terminals 16n in the X axis direction. Floor wall portion 111 is provided with through holes 112 to expose gas-discharge valves 17.

The pair of vertical wall portions 116 rise from floor wall portion 111 in the +Z axis direction. An end portion (lower end portion) of each vertical wall portion 116 in the -Z axis direction is connected to floor wall portion 111. Vertical wall portion 116 has a wall shape having a thickness in the X axis direction and extending in the Y axis direction with an unchanged height in the Z axis direction across the plurality of case bodies 31 arranged side by side in the Y axis direction.

The pair of vertical wall portions 116 are provided with a space being interposed therebetween in the X axis direction. Vertical wall portion 116S is provided at a position away from vertical wall portion 116T in the +X axis direction. The pair of vertical wall portions 116 are provided at the center portions of case top portions 32 in the X axis direction. Through holes 112 are opened between vertical wall portion 116S and vertical wall portion 116T in the X axis direction. In a state in which duct 71 is not attached to attachment-target member 30, a space surrounded in three directions by floor wall portion 111, vertical wall portion 116S, and vertical wall portion 116T is opened in the +Z axis direction and the ±Y axis direction.

Referring to Figs. 2 and 3 as well as Figs. 7 to 11, duct 71 has a duct main body portion 72. Duct main body portion 72 forms a main part of duct 71 for allowing gas from each battery cell 11 to flow therethrough. Duct main body portion 72 extends in the Y axis direction with duct main body portion 72 facing, in the Z axis direction, the plurality of gas-discharge valves 17 arranged side by side with a space being interposed therebetween in the Y axis direction.

Duct 71 (duct main body portion 72) is disposed between the pair of vertical wall portions 116. Duct 71 (duct main body portion 72) and case bodies 31 form a flow space 110 for gas discharged from each battery cell 11.

As shown in Figs. 7 to 11, duct 71 (duct main body portion 72) has a duct top wall portion 136, a pair of duct side wall portions 131 (131S, 131T), and a pair of duct side wall portions 141 (141P, 141Q).

Duct top wall portion 136 is disposed in parallel with the X-Y axes plane. Duct top wall portion 136 has a wall shape having a thickness in the Z axis direction and extending in the Y axis direction with an unchanged width in the X axis direction. Duct top wall portion 136 faces floor wall portion 111 with flow space 110 being interposed therebetween in the Z axis direction. Flow space 110 is formed between duct top wall portion 136 and floor wall portion 111 in the Z axis direction.

The pair of duct side wall portions 131 extend, in the Z axis direction toward floor wall portion 111 (in the -Z axis direction), from both end portions of duct top wall portion 136 in the X axis direction. Each of duct side wall portions 131 has a wall shape having a thickness in the X axis direction and extending in the Y axis direction with an unchanged height in the Z axis direction. The pair of duct side wall portions 131 are provided with a space being interposed therebetween in the X axis direction. Duct side wall portion 131S is provided at a position away from duct side wall portion 131T in the +X axis direction. Flow space 110 is formed between duct side wall portion 1315 and duct side wall portion 131T in the X axis direction.

Duct side wall portion 131S faces vertical wall portion 116S in the X axis direction. Duct side wall portion 131T faces vertical wall portion 116T in the X axis direction. A space is provided between duct side wall portion 131S and vertical wall portion 116S in the X axis direction. A space is provided between duct side wall portion 131T and vertical wall portion 116T in the X axis direction. The size of each of these spaces may be such a size that leakage of a small amount of gas from flow space 110 is permitted.

Each of duct side wall portions 141 is disposed in parallel with the X-Z axes plane. The pair of duct side wall portions 141 are provided with a space being interposed therebetween in the Y axis direction. The pair of duct side wall portions 141 are connected to both end portions of duct top wall portion 136 and both end portions of each of the pair of duct side wall portions 131 in the Y axis direction.

Duct side wall portion 141P is provided at a position away from duct side wall portion 141Q in the -Y axis direction. Flow space 110 is formed between duct side wall portion 141P and duct side wall portion 141Q in the Y axis direction. Duct side wall portion 141 has a wall shape having a thickness in the Y axis direction and extending in the X axis direction with an unchanged height in the Z axis direction.

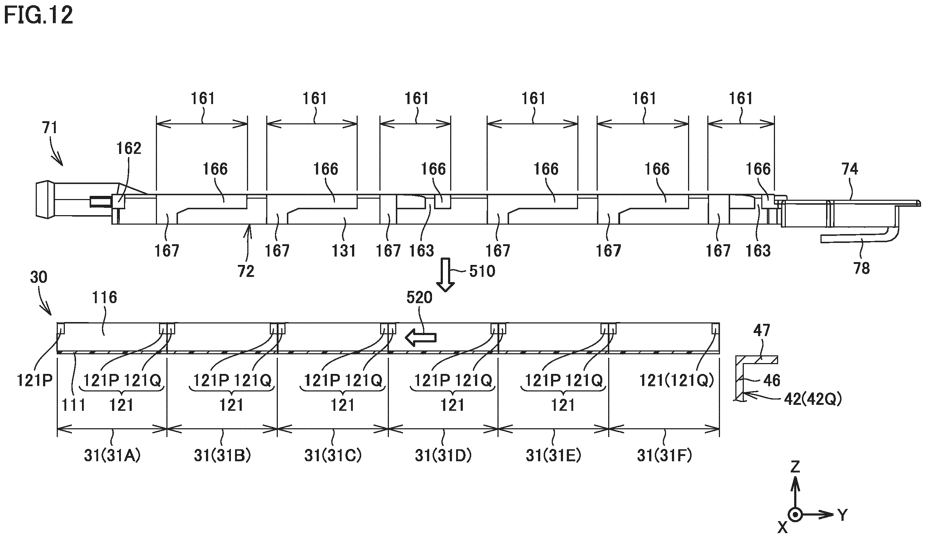

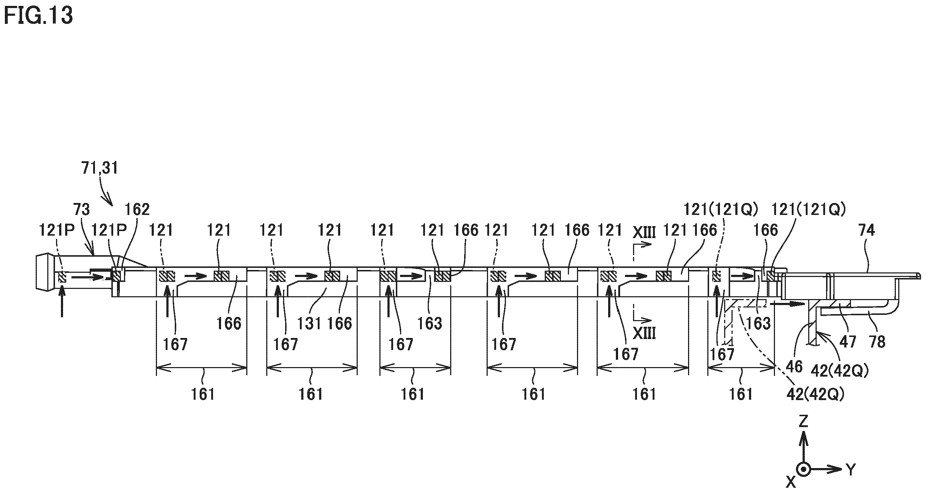

Each of Figs. 12 and 13 is a side view showing a step when attaching the duct to the attachment-target member. Referring to Figs. 4, 5, 10, and 12, each vertical wall portion 116 of attachment-target member 30 (the plurality of case bodies 31) has claw portions 121. Each of claw portions 121 has a protruding shape protruding in the X axis direction.

As shown in Fig. 10, claw portions 121 are provided in each of vertical wall portions 116, i.e., vertical wall portion 116S and vertical wall portion 116T. Each of claw portions 121 is provided in vertical wall portion 116S to protrude toward duct side wall portion 131S from the inner surface of vertical wall portion 116S facing duct side wall portion 131S in the X axis direction. Each of claw portions 121 is provided in vertical wall portion 116T to protrude toward duct side wall portion 131T from the inner surface of vertical wall portion 116T facing duct side wall portion 131T in the X axis direction.

Claw portions 121 are provided at the upper end portion of each vertical wall portion 116. The plurality of claw portions 121 are provided in each vertical wall portion 116 with a space being interposed therebetween in the Y axis direction. The plurality of claw portions 121 are provided such that claw portions 121 of vertical wall portion 116S and claw portions 121 of vertical wall portion 116T face each other in the X axis direction.

As shown in Fig. 5, in each case body 31 of attachment-target member 30, vertical wall portion 116 is provided with a first protrusion 121P and a second protrusion 121Q. First protrusion 121P and second protrusion 121Q are provided at both end portions of case body 31 in the Y axis direction. Each of first protrusion 121P and second protrusion 121Q has a protruding shape protruding in the X axis direction.

As shown in Figs. 4 and 12, when the plurality of case bodies 31 are arranged side by side in the Y axis direction, respective first protrusions 121P and second protrusions 121Q of adjacent case bodies 31 in the Y axis direction are connected together in the Y axis direction, thereby forming claw portions 121.

In Figs. 4 and 12, respective case bodies 31 of battery cell unit 21A, battery cell unit 21B, battery cell unit 21C, battery cell unit 21D, battery cell unit 21E, and battery cell unit 21F are shown as a case body 31A, a case body 31B, a case body 31C, a case body 31D, a case body 31E, and a case body 31F, respectively. For example, first protrusion 121P provided in case body 31C and second protrusion 121Q provided in case body 31D adjacent to case body 31C are connected to each other in the Y axis direction to form a claw portion 121.

On the other hand, at the end portion of vertical wall portion 116 in the -Y axis direction, first protrusion 121P provided in case body 31A is disposed solely. At the end portion of vertical wall portion 116 in the +Y axis direction, second protrusion 121Q provided in case body 31F is disposed solely to form a claw portion 121.

Referring to Figs. 7, 8, 10, and 12, groove portions 161 are formed in each duct side wall portion 131 of duct 71. Each of groove portions 161 has a recessed shape recessed in the X axis direction.

As shown in Fig. 10, groove portions 161 are provided in each of duct side wall portions 131, i.e., duct side wall portion 131S and duct side wall portion 131T. Duct side wall portion 131S is provided with groove portions 161 each recessed from the outer surface of duct side wall portion 131S facing vertical wall portion 116S in the X axis direction so as to be separated away from vertical wall portion 116S. Duct side wall portion 131T is provided with groove portions 161 each recessed from the outer surface of duct side wall portion 131T facing vertical wall portion 116T in the X axis direction so as to be separated away from vertical wall portion 116T.

The plurality of groove portions 161 are formed in each duct side wall portion 131 with a space being interposed therebetween in the Y axis direction. The plurality of groove portions 161 are provided such that groove portions 161 of duct side wall portion 131S and groove portions 161 of duct side wall portion 131T face each other in the X axis direction. The plurality of groove portions 161 are provided to respectively correspond to the plurality of claw portions 121 provided in vertical wall portion 116. With such a configuration, respective sets of claw portions 121 and groove portions 161 are provided at a plurality of positions with a space being interposed therebetween in the Y axis direction.

Each of duct side wall portions 131 (131S, 131T) is further provided with a groove portion 162. Groove portion 162 is provided at the end portion of duct side wall portion 131 in the -Y axis direction. The recessed shape of groove portion 162 is opened in the +Z axis direction and the -Y axis direction.

Each of groove portions 161 has a first segment portion 166 and a second segment portion 167. First segment portion 166 extends in the Y axis direction. In a state in which duct 71 is attached to attachment-target member 30 (the plurality of case bodies 31), claw portion 121 is disposed in first segment portion 166. First segment portion 166 anchors claw portion 121 in the Z axis direction.

First segment portion 166 extends in the Y axis direction along the end portion (upper end portion) of duct side wall portion 131 in the +Z axis direction. First segment portion 166 has a recessed shape forming a step in the X axis direction with respect to the outer surface of duct side wall portion 131 at its end portion in the -Z axis direction and extending in the Y axis direction as its longitudinal direction.

Second segment portion 167 extends in a direction intersecting the Y axis direction and is connected to first segment portion 166. Second segment portion 167 extends in the Z axis direction orthogonal to the Y axis direction. Second segment portion 167 has a recessed shape forming steps with respect to the outer surface of duct side wall portion 131 at its both end portions in the Y axis direction and extending in the Z axis direction as its longitudinal direction. The end portion (upper end portion) of second segment portion 167 in the +Z axis direction and the end portion of first segment portion 166 in the -Y axis direction are connected to each other. First segment portion 166 extends in the +Y axis direction from a position at which first segment portion 166 and second segment portion 167 are connected to each other. Second segment portion 167 allows claw portion 121 to enter first segment portion 166 when attaching duct 71 to attachment-target member 30.

The length of first segment portion 166 in the Y axis direction is preferably 1/2 or less, more preferably 1/4 or less, and further preferably 1/6 or less of the total length of duct side wall portion 131 in the Y axis direction.

Duct side wall portion 131 has a stepped portion 163. Stepped portion 163 is provided in at least one groove portion 161 of the plurality of groove portions 161.

Stepped portion 163 is provided on a path of first segment portion 166. Stepped portion 163 is provided between the end portion of first segment portion 166 in the +Y axis direction and the end portion of first segment portion 166 in the -Y axis direction. Stepped portion 163 has a stepped shape rising from the bottom surface of groove portion 161. More specifically, based on the bottom surface of groove portion 161 as a reference, stepped portion 163 is constituted of: a top surface having the same height as the outer surface of duct side wall portion 131 in the X axis direction; an inclined surface extending obliquely with respect to the Y-X axes plane between the end portion of the top surface in the -Y axis direction and the bottom surface of groove portion 161; and a right-angled surface extending in parallel with the X-Z axes plane between the end portion of the top surface in the +Y axis direction and the bottom surface of groove portion 161.

In a state in which duct 71 is attached to attachment-target member 30, claw portion 121 is disposed opposite to second segment portion 167 with stepped portion 163 being interposed therebetween on the path of first segment portion 166. Claw portion 121 is disposed between the end portion of first segment portion 166 in the +Y axis direction and stepped portion 163.

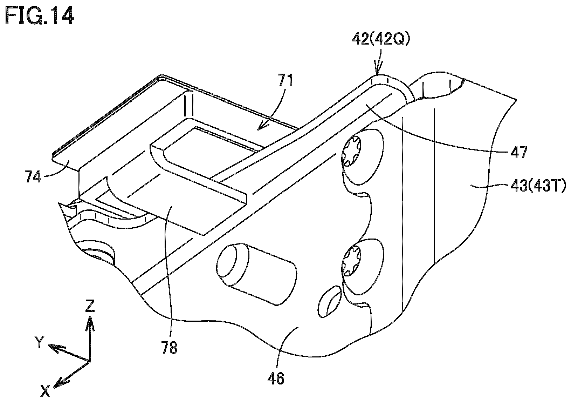

Fig. 14 is a perspective view showing the battery module when viewed in a direction indicated by an arrow XIV in Fig. 3. Referring to Figs. 7, 8, and 14, duct 71 further has a duct extension portion 74 and a clip portion 78.

Duct extension portion 74 extends in the +Y axis direction from the end portion of duct main body portion 72 in the +Y axis direction. Duct extension portion 74 has a shape of plate disposed in parallel with the X-Y axes plane.

Clip portion 78 extends in the -Y axis direction from duct extension portion 74. Clip portion 78 has a bar shape having a thickness in the Z axis direction and extending in the Y axis direction with an unchanged width in the X axis direction. An end portion of clip portion 78 in the +Y axis direction is connected to duct extension portion 74. Clip portion 78 is elastically deformable such that the end portion of clip portion 78 in the -Y axis direction is displaced along the Z axis direction with respect to a position connected to duct extension portion 74.

As shown in Fig. 14, in a state in which duct 71 is attached to attachment-target member 30, clip portion 78 and duct extension portion 74 sandwich end plate 42Q in the Z axis direction. Roof portion 47 of end plate 42Q is sandwiched between duct extension portion 74 and clip portion 78 in the Z axis direction.

Referring to Figs. 12 and 13, when attaching duct 71 to attachment-target member 30, duct 71 is first disposed to face attachment-target member 30 such that the plurality of claw portions 121 respectively face second segment portions 167 of the plurality of groove portions 161 in the Z axis direction.

Next, duct 71 is slid in the -Z axis direction indicated by an arrow 510 in Fig. 12 and is accordingly disposed between the pair of vertical wall portions 116 (116S, 116T). On this occasion, each of the plurality of claw portions 121 enters a corresponding one of the plurality of second segment portions 167, and is moved through second segment portion 167 to the position at which first segment portion 166 and second segment portion 167 are connected to each other (position at which claw portion 121 is indicated by a chain double-dashed line in Fig. 13). Further, first protrusion 121P provided in case body 31A is positioned to face groove portion 162 in the Y axis direction, and roof portion 47 of end plate 42Q is positioned to face a space between clip portion 78 and duct extension portion 74 in the Y axis direction.

Next, duct 71 is slid in the -Y axis direction indicated by an arrow 520 in Fig. 12. On this occasion, each of the plurality of claw portions 121 is moved through first segment portion 166 to a position away in the +Y axis direction from the position at which first segment portion 166 and second segment portion 167 are connected to each other. Further, in groove portion 161 provided with stepped portion 163, claw portion 121 climbs over stepped portion 163 during the movement in first segment portion 166. Claw portion 121 disposed in first segment portion 166 is brought into abutment with the stepped portion in the X axis direction as formed by first segment portion 166 and the outer surface of duct side wall portion 131, and is accordingly anchored in the Z axis direction.

First protrusion 121P provided in case body 31A is disposed in groove portion 162. First protrusion 121P disposed in groove portion 162 is brought into abutment with the stepped portion in the X axis direction as formed by groove portion 162 and the outer surface of duct side wall portion 131, and is accordingly anchored in the Z axis direction. Roof portion 47 of end plate 42Q is inserted between clip portion 78 and duct extension portion 74.

With the above steps, the operation of attaching duct 71 to attachment-target member 30 is completed. It should be noted that when detaching duct 71 from attachment-target member 30, the above steps may be performed in the reverse order.

According to such a configuration, when attaching duct 71 to attachment-target member 30, claw portion 121 enters first segment portion 166 through second segment portion 167 extending in the direction intersecting with the Y axis direction, with the result that a sliding amount of duct 71 in the Y axis direction can be suppressed to be small. In particular, in the present embodiment, since second segment portion 167 extends in the Z axis direction orthogonal to the Y axis direction, the sliding amount of duct 71 in the Y axis direction can be suppressed to be smaller. Thus, workability when attaching duct 71 to attachment-target member 30 can be improved.

The sets of claw portions 121 and groove portions 162 are provided at the plurality of positions with a space being interposed therebetween in the Y axis direction. With such a configuration, since the anchoring structures by claw portions 121 and groove portions 162 are obtained at the plurality of positions with a space being interposed therebetween in the Y axis direction, duct 71 can be more firmly attached to attachment-target member 30.

Further, at least one groove portion 161 of the plurality of groove portions 161 is provided with stepped portion 163 rising from the bottom surface of groove portion 161, and claw portion 121 climbs over stepped portion 163 and is then disposed in first segment portion 166 when attaching duct 71 to attachment-target member 30. With such a configuration, since movement of claw portion 121 in the Y axis direction is regulated by stepped portion 163, a state of attachment of duct 71 to attachment-target member 30 can be more securely maintained.

Further, first protrusion 121P and second protrusion 121Q are respectively provided at the both end portions of each case body 31 in the Y axis direction, and first protrusion 121P and second protrusion 121Q of respective case bodies 31 adjacent to each other in the Y axis direction are connected to each other to form claw portion 121. According to such a configuration, in addition to claw portion 121 formed by first protrusion 121P and second protrusion 121Q, first protrusion 121P and second protrusion 121Q are respectively disposed at the both end portions of the plurality of case bodies 31 arranged side by side in the Y axis direction. By anchoring these first protrusions 121P and second protrusions 121Q to groove portion 162 and groove portions 161, duct 71 can be more firmly attached to attachment-target member 30.

Further, by providing clip portion 78 in duct 71 and sandwiching roof portion 47 of end plate 42Q by clip portion 78 and duct extension portion 74, the state of attachment of duct 71 to attachment-target member 30 can be more securely maintained.

The direction (+Y axis direction) in which first segment portion 166 extends in the Y axis direction from the position at which first segment portion 166 and second segment portion 167 are connected to each other and the direction (-Y axis direction) in which clip portion 78 extends from duct extension portion 74 are opposite to each other along the Y axis direction. In this case, when attaching duct 71 to attachment-target member 30, the direction of insertion of roof portion 47 of end plate 42Q with respect to clip portion 78 and the direction of movement of claw portion 121 in first segment portion 166 become the same along the Y axis direction, with the result that the placement of claw portion 121 to first segment portion 166 and the sandwiching of roof portion 47 of end plate 42Q by clip portion 78 can be performed simultaneously.

The above-described structure of battery module 100 according to the embodiment of the present invention are summarized as follows. Battery module 100 according to the present embodiment includes: the plurality of battery cells 11 stacked in the Y axis direction (first direction); duct 71 through which gas discharged from each of battery cells 11 flows, duct 71 extending in the Y axis direction with duct 71 facing the plurality of battery cells 11 in the Z axis direction (second direction) orthogonal to the Y axis direction; and attachment-target member 30 to which duct 71 is attached, attachment-target member 30 being held by battery cells 11. Attachment-target member 30 has the pair of vertical wall portions 116 serving as first wall portions and facing each other with a space being interposed between the pair of vertical wall portions 116 in the X axis direction (third direction) orthogonal to the Y axis direction and the Z axis direction. Duct 71 has the pair of duct side wall portions 131 serving as second wall portions and respectively facing the pair of vertical wall portions 116 in the X axis direction, and is disposed between the pair of vertical wall portions 116.

Vertical wall portion 116 serving as one wall portion that is one of each vertical wall portion 116 and each duct side wall portion 131 is provided with claw portion 121 having a protruding shape protruding in the X axis direction. Duct side wall portion 131 serving as the other wall portion that is the other of each vertical wall portion 116 and each duct side wall portion 131 is provided with groove portion 161 having a recessed shape recessed in the X axis direction. Groove portion 161 includes first segment portion 166 and second segment portion 167, first segment portion 166 extending in the Y axis direction, claw portion 121 being disposed in first segment portion 166, first segment portion 166 anchoring claw portion 121 in the Z axis direction, second segment portion 167 being opened at the end portion of duct side wall portion 131 in the Z axis direction, second segment portion 167 extending in the direction intersecting the Y axis direction, second segment portion 167 being connected to first segment portion 166, second segment portion 167 allowing claw portion 121 to enter first segment portion 166 when attaching duct 71 to attachment-target member 30.

According to battery module 100 of the embodiment of the present invention thus configured, when attaching duct 71 having an elongated shape in the Y axis direction to attachment-target member 30, the sliding amount of duct 71 in the Y axis direction can be suppressed to be small, with the result that the workability when attaching duct 71 can be excellent.

It should be noted that second segment portion 167 may extend in a direction intersecting the Y axis direction at an angle smaller than 90°. The angle formed between second segment portion 167 and the Y axis direction is preferably 45° or more, and is more preferably 60° or more. Further, in the present invention, the claw portion may be provided on the duct side, and the groove portion may be provided on the attachment-target member side.

In the present embodiment, it has been described that the attachment-target member in the present invention is constituted of the plurality of case bodies 31 that each accommodate battery cells 11; however, the present invention is not limited thereto. The duct in the present invention may be attached to a separator interposed between the battery cells stacked in the Y axis direction, for example.

Although the embodiments of the present invention have been described and illustrated in detail, it is clearly understood that the same is by way of illustration and example only and is not to be taken by way of limitation. The scope of the present invention is defined by the terms of the claims.

## Claims

1. A battery module comprising:
a plurality of battery cells (11) stacked in a first direction;
a duct (71) through which gas discharged from each of the battery cells (11) flows, the duct (71) extending in the first direction with the duct (71) facing the plurality of battery cells (11) in a second direction orthogonal to the first direction; and
an attachment-target member (30) to which the duct (71) is attached, the attachment-target member (30) being held by the battery cells (11), wherein
the attachment-target member (30) has a pair of first wall portions (116) facing each other with a space being interposed between the pair of first wall portions (116) in a third direction orthogonal to the first direction and the second direction,
the duct (71) has a pair of second wall portions (131) respectively facing the pair of first wall portions (116) in the third direction, and is disposed between the pair of first wall portions (116),
**characterized in that**
one wall portion that is one of each first wall portion (116) and each second wall portion (131) is provided with a claw portion (121) having a protruding shape protruding in the third direction,
the other wall portion that is the other of each first wall portion (116) and each second wall portion (131) is provided with a groove portion (161) having a recessed shape recessed in the third direction, and
the groove portion (161) includes a first segment portion (166) and a second segment portion (167), the first segment portion (166) extending in the first direction, the claw portion (121) being disposed in the first segment portion (166), the first segment portion (166) anchoring the claw portion (121) in the second direction, the second segment portion (167) being opened at an end portion of the other wall portion in the second direction, the second segment portion (167) extending in a direction intersecting the first direction, the second segment portion (167) being connected to the first segment portion (166), the second segment portion (167) allowing the claw portion (121) to enter the first segment portion (166) when attaching the duct (71) to the attachment-target member (30).

2. The battery module according to claim 1, wherein a set of the claw portion (121) and the groove portion (161) is provided at each of a plurality of positions with a space being interposed between the plurality of positions in the first direction.

3. The battery module according to claim 1 or 2, wherein the second segment portion (167) extends in the second direction.

4. The battery module according to any one of claims 1 to 3, wherein
the other wall portion further has a stepped portion (163) provided on a path of the first segment portion (166), the stepped portion (163) rising from a bottom surface of the groove portion (161), and
the claw portion (121) is disposed on the path of the first segment portion (166) and opposite to the second segment portion (167) with the stepped portion (163) being interposed between the claw portion (121) and the second segment portion (167).

5. The battery module according to any one of claims 1 to 4, further comprising an end plate (42Q) disposed at an end portion beside the plurality of battery cells (11) in the first direction, wherein
the duct (71) includes
a duct main body portion (72) having the pair of first wall portions (116) and extending in the first direction to form a space through which the gas flows,
a duct extension portion (74) extending, in one direction along the first direction, from an end portion of the duct main body portion (72) in the first direction, and
a clip portion (78) extending from the duct extension portion (74) in the other direction along the first direction, the clip portion (78) and the duct extension portion (74) sandwiching the end plate (42Q) in the second direction.

6. The battery module according to claim 5, wherein the first segment portion (166) extends, in the one direction along the first direction, from a position at which the first segment portion (166) and the second segment portion (167) are connected to each other.

7. The battery module according to any one of claims 1 to 6, comprising a plurality of battery cell units (21) arranged side by side in the first direction, wherein
each of the battery cell units (21) has
a plurality of the battery cells (11) arranged side by side continuously in the first direction, and
a case body (31) that accommodates the plurality of the battery cells (11) arranged side by side continuously in the first direction, and
the attachment-target member (30) is constituted of a plurality of the case bodies (31).

8. The battery module according to claim 7, wherein
the one wall portion is each first wall portion (116) and the other wall portion is each second wall portion (131),
the first wall portion (116) is provided with first protrusions (121P) and second protrusions (121Q), each first protrusion (121P) and each second protrusion (121Q) being respectively disposed at both end portions of each case body (31) in the first direction, each of the first protrusions (121P) and the second protrusions (121Q) protruding in the third direction,
the claw portion (121) is formed by a first protrusion (121P) and a second protrusion (121Q) of the respective case bodies (31) adjacent to each other in the first direction, the first protrusion (121P) and the second protrusion (121Q) of the respective case bodies (31) adjacent to each other being connected to each other, and
a first protrusion (121P) and a second protrusion (121Q) respectively disposed at one end and the other end of the plurality of battery cell units (21) arranged side by side in the first direction are anchored in the second direction by the second wall portion (131).

## Patentansprüche

1. Batteriemodul, aufweisend:
eine Mehrzahl an Batteriezellen (11), die in einer ersten Richtung gestapelt sind;
einen Kanal (71), durch den von jeder der Batteriezellen (11) ausgestoßenes Gas strömt, wobei der Kanal (71) in der ersten Richtung verläuft, wobei der Kanal (71) der Mehrzahl an Batteriezellen (11) in einer zweiten Richtung entgegengesetzt ist, die zu der ersten Richtung rechtwinklig ist; und
ein Befestigungszielelement (30), an dem der Kanal (71) befestigt ist, wobei das Befestigungszielelement (30) durch die Batteriezellen (11) gehalten wird, wobei
das Befestigungszielelement (30) ein Paar erster Wandabschnitte (116) aufweist, die einander entgegengesetzt sind, wobei in einer dritten Richtung, die zu der ersten Richtung und der zweiten Richtung rechtwinklig ist, ein Raum zwischen das Paar erster Wandabschnitte (116) gesetzt ist,
der Kanal (71) ein Paar zweiter Wandabschnitte (131) aufweist, die jeweils dem Paar erster Wandabschnitte (116) in der dritten Richtung entgegengesetzt sind und sich zwischen dem Paar erster Wandabschnitte (116) befinden,
**dadurch gekennzeichnet, dass**
ein Wandabschnitt, bei dem es sich um einen von jedem ersten Wandabschnitt (116) und jedem zweiten Wandabschnitt (131) handelt, mit einem Klauenabschnitt (121) versehen ist, der eine hervorstehende Form aufweist, die in der dritten Richtung hervorsteht,
der andere Wandabschnitt, bei dem es sich um den anderen von jedem ersten Wandabschnitt (116) und jedem zweiten Wandabschnitt (131) handelt, mit einem Fugenabschnitt (161) versehen ist, der eine vertiefte Form aufweist, die in der dritten Richtung vertieft ist, und
der Fugenabschnitt (161) einen ersten Segmentabschnitt (166) und einen zweiten Segmentabschnitt (167) beinhaltet, wobei der erste Segmentabschnitt (166) in der ersten Richtung verläuft, der Klauenabschnitt (121) sich in dem ersten Segmentabschnitt (166) befindet, der erste Segmentabschnitt (166) den Klauenabschnitt (121) in der zweiten Richtung verankert, der zweite Segmentabschnitt (167) an einem Endabschnitt des anderen Wandabschnitts in der zweiten Richtung geöffnet ist, der zweite Segmentabschnitt (167) in einer Richtung verläuft, die die erste Richtung schneidet, der zweite Segmentabschnitt (167) mit dem ersten Segmentabschnitt (166) verbunden ist, der zweite Segmentabschnitt (167) es dem Klauenabschnitt (121) ermöglicht, in den ersten Segmentabschnitt (166) einzudringen, wenn der Kanal (71) an dem Befestigungszielelement (30) befestigt wird.

2. Batteriemodul nach Anspruch 1, wobei ein Satz aus dem Klauenabschnitt (121) und dem Fugenabschnitt (161) an jeder von einer Mehrzahl an Positionen vorhanden ist, wobei in der ersten Richtung ein Raum zwischen die Mehrzahl an Positionen gesetzt ist.

3. Batteriemodul nach Anspruch 1 oder 2, wobei der zweite Segmentabschnitt (167) in der zweiten Richtung verläuft.

4. Batteriemodul nach einem der Ansprüche 1 bis 3, wobei
der andere Wandabschnitt ferner einen gestuften Abschnitt (163) aufweist, der sich auf einem Pfad des ersten Segmentabschnitts (166) befindet, wobei der gestufte Abschnitt (163) von einer Bodenfläche des Fugenabschnitts (161) aus aufsteigt, und
der Klauenabschnitt (121) sich auf dem Pfad des ersten Segmentabschnitts (166) und gegenüber dem zweiten Segmentabschnitt (167) befindet, wobei der gestufte Abschnitt (163) zwischen den Klauenabschnitt (121) und den zweiten Segmentabschnitt (167) gesetzt ist.

5. Batteriemodul nach einem der Ansprüche 1 bis 4, ferner aufweisend eine Endplatte (42Q), die sich in der ersten Richtung an einem Endabschnitt neben der Mehrzahl an Batteriezellen (11) befindet, wobei
der Kanal (71) beinhaltet:
einen Kanalhauptkörperabschnitt (72) mit dem Paar erster Wandabschnitte (116), der in der ersten Richtung verläuft, um einen Raum zu bilden, durch den das Gas strömt,
einen Kanalverlaufsabschnitt (74), der in einer Richtung entlang der ersten Richtung von einem Endabschnitt des Kanalhauptkörperabschnitts (72) in der ersten Richtung verläuft, und
einen Klemmabschnitt (78), der von dem Kanalverlaufsabschnitt (74) aus in der anderen Richtung entlang der ersten Richtung verläuft, wobei der Klemmabschnitt (78) und der Kanalverlaufsabschnitt (74) die Endplatte (42Q) in der zweiten Richtung zwischen sich klemmen.

6. Batteriemodul nach Anspruch 5, wobei der erste Segmentabschnitt (166) in der einen Richtung entlang der ersten Richtung von einer Position aus verläuft, an der der erste Segmentabschnitt (166) und der zweite Segmentabschnitt (167) miteinander verbunden sind.

7. Batteriemodul nach einem der Ansprüche 1 bis 6, aufweisend eine Mehrzahl an Batteriezelleneinheiten (21), die nebeneinander in der ersten Richtung angeordnet sind, wobei jede der Batteriezelleneinheiten (21) aufweist:
eine Mehrzahl der Batteriezellen (11), die kontinuierlich nebeneinander in der ersten Richtung angeordnet sind, und
einen Gehäusekörper (31), der die Mehrzahl der Batteriezellen (11) aufnimmt, die kontinuierlich nebeneinander in der ersten Richtung angeordnet sind, und
wobei das Befestigungszielelement (30) aus einer Mehrzahl der Gehäusekörper (31) besteht.

8. Batteriemodul nach Anspruch 7, wobei
der eine Wandabschnitt jeder erste Wandabschnitt (116) und der andere Wandabschnitt jeder zweite Wandabschnitt (131) ist,
der erste Wandabschnitt (116) mit ersten Vorsprüngen (121P) und zweiten Vorsprüngen (121Q) versehen ist, wobei sich jeder erste Vorsprung (121P) und jeder zweite Vorsprung (121Q) jeweils in der ersten Richtung an beiden Endabschnitten jedes Gehäusekörpers (31) befindet, wobei jeder von den ersten Vorsprüngen (121P) und den zweiten Vorsprüngen (121Q) in der dritten Richtung hervorsteht,
der Klauenabschnitt (121) durch einen ersten Vorsprung (121P) und einen zweiten Vorsprung (121Q) der entsprechenden in der ersten Richtung nebeneinander liegenden Gehäusekörper (31) gebildet wird, wobei der erste Vorsprung (121P) und der zweite Vorsprung (121Q) der entsprechenden nebeneinander liegenden Gehäusekörper (31) miteinander verbunden sind, und
ein erster Vorsprung (121P) und ein zweiter Vorsprung (121Q), die sich jeweils an einem Ende und dem anderen Ende der Mehrzahl an Batteriezelleneinheiten (21) befinden, die in der ersten Richtung nebeneinander angeordnet sind, in der zweiten Richtung durch den zweiten Wandabschnitt (131) verankert sind.

## Revendications

1. Module de batterie comprenant :
une pluralité de cellules de batterie (11) empilés dans une première direction ;
un conduit (71) à travers lequel s'écoule le gaz déchargé de chacun des cellules de batterie (11), le conduit (71) s'étendant dans la première direction, le conduit (71) faisant face à la pluralité de cellules de batterie (11) dans une deuxième direction orthogonale à la première direction ; et
un élément cible de fixation (30) auquel le conduit (71) est fixé, l'élément cible de fixation (30) étant maintenu par les cellules de batterie (11), dans lequel
l'élément cible de fixation (30) comporte une paire de premières parties de paroi (116) se faisant face, un espace étant interposé entre la paire de premières parties de paroi (116) dans une troisième direction orthogonale à la première direction et à la deuxième direction,
le conduit (71) comporte une paire de deuxièmes parties de paroi (131) faisant respectivement face à la paire de premières parties de paroi (116) dans la troisième direction, et est disposé entre la paire de premières parties de paroi (116),
**caractérisé par le fait que**
une partie de paroi qui est l'une de chaque première partie de paroi (116) et de chaque deuxième partie de paroi (131) est pourvue d'une partie de griffe (121) ayant une forme saillante faisant saillie dans la troisième direction,
l'autre partie de paroi qui est l'autre de chaque première partie de paroi (116) et de chaque deuxième partie de paroi (131) est pourvue d'une partie de rainure (161) ayant une forme en retrait dans la troisième direction, et
la partie de rainure (161) comprend une première partie de segment (166) et une deuxième partie de segment (167), la première partie de segment (166) s'étendant dans la première direction, la partie de griffe (121) étant disposée dans la première partie de segment (166), la première partie de segment (166) ancrant la partie de griffe (121) dans la deuxième direction, la deuxième partie de segment (167) étant ouverte à une partie d'extrémité de l'autre partie de paroi dans la deuxième direction, la deuxième partie de segment (167) s'étendant dans une direction croisant la première direction, la deuxième partie de segment (167) étant reliée à la première partie de segment (166), la deuxième partie de segment (167) permettant à la partie de griffe (121) de pénétrer dans la première partie de segment (166) lors de la fixation du conduit (71) à l'élément cible de fixation (30).

2. Le module de batterie selon la revendication 1, dans lequel un ensemble de la partie de griffe (121) et de la partie de rainure (161) est fourni à chacune d'une pluralité de positions, un espace étant interposé entre la pluralité de positions dans la première direction.

3. Le module de batterie selon la revendication 1 ou 2, dans lequel la deuxième partie de segment (167) s'étend dans la deuxième direction.

4. Le module de batterie selon l'une des revendications 1 à 3, dans lequel
l'autre partie de paroi comporte en outre une partie en escalier (163) située sur le trajet de la première partie de segment (166), la partie en escalier (163) s'élevant à partir d'une surface inférieure de la partie de rainure (161), et
la partie de griffe (121) est disposée sur le trajet de la première partie de segment (166) et à l'opposé de la deuxième partie de segment (167), la partie en escalier (163) étant interposée entre la partie de griffe (121) et la deuxième partie de segment (167).

5. Le module de batterie selon l'une des revendications 1 à 4, comprenant en outre une plaque d'extrémité (42Q) disposée à une partie d'extrémité à côté de la pluralité de cellules de batterie (11) dans la première direction, dans lequel
le conduit (71) comprend
une partie du corps principal du conduit (72) comportant la paire de premières parties de paroi (116) et s'étendant dans la première direction pour former un espace à travers lequel le gaz s'écoule,
une partie d'extension du conduit (74) s'étendant, dans une direction le long de la première direction, à partir d'une partie d'extrémité de la partie du corps principal du conduit (72) dans la première direction, et
une partie de clip (78) s'étendant à partir de la partie d'extension du conduit (74) dans l'autre direction le long de la première direction, la partie de clip (78) et la partie d'extension du conduit (74) prenant en sandwich la plaque d'extrémité (42Q) dans la deuxième direction.

6. Le module de batterie selon la revendication 5, dans lequel la première partie de segment (166) s'étend, dans une direction le long de la première direction, à partir d'une position à laquelle la première partie de segment (166) et la deuxième partie de segment (167) sont reliées l'une à l'autre.

7. Le module de batterie selon l'une des revendications 1 à 6, comprenant une pluralité d'unités de cellules de batterie (21) disposées côte à côte dans la première direction, dans lequel
chacune des unités de cellules de batterie (21) comporte
une pluralité de cellules de batterie (11) disposés côte à côte de manière continue dans la première direction, et
un corps de boîtier (31) qui accueille la pluralité de cellules de batterie (11) disposés côte à côte de manière continue dans la première direction, et
l'élément cible de fixation (30) est constitué d'une pluralité de corps de boîtier (31).

8. Le module de batterie selon la revendication 7, dans lequel
la première partie de paroi est chaque première partie de paroi (116) et l'autre partie de paroi est chaque deuxième partie de paroi (131),
la première partie de paroi (116) est pourvue de premières saillies (121P) et de deuxièmes saillies (121Q), chaque première saillie (121P) et chaque deuxième saillie (121Q) étant respectivement disposées aux deux parties de l'extrémité de chaque corps de boîtier (31) dans la première direction, chacune des premières saillies (121P) et des deuxièmes saillies (121Q) faisant saillie dans la troisième direction,
la partie de griffe (121) est formée par une première saillie (121P) et une deuxième saillie (121Q) des corps de boîtier respectifs (31) adjacents l'un à l'autre dans la première direction, la première saillie (121P) et la deuxième saillie (121Q) des corps de boîtier respectifs (31) adjacents l'un à l'autre étant reliées l'une à l'autre, et
une première saillie (121P) et une deuxième saillie (121Q) disposées respectivement à une extrémité et à l'autre extrémité de la pluralité d'unités de cellules de batterie (21) disposés côte à côte dans la première direction sont ancrées dans la deuxième direction par la deuxième partie de la paroi (131).
